# EUROPEAN PATENT APPLICATION

(11) **EP 1 568 757 A1**
(43) Date of publication of application: **31.08.2005**
(21) Application number: 05010589.9
(22) Date of filing: 16.12.1999
(51) Int. Cl.: C10L 1/22, C10L 10/00

(54) **High-amine mannich dispersants for compression-ignition fuels**

(30) Priority: 18.12.1998 US 216414
(62) Divisional of application: 99310148.4
(71) Applicant: ETHYL CORPORATION, Virginia 23218-2189 (US)
(72) Inventor: Henly, Timothy J., Maidens Virginia 23102 (US)
(74) Representative: Colmer, Stephen Gary

(57) **Abstract**

Effective dispersants for use in compression ignition fuels are described as are compression ignition fuels containing such dispersants. The invention includes a fuel composition comprising: (a) a compression-ignition internal combustion fuel; and (b) a Mannich dispersant additive formed from: (1) at least one alkyl-substituted hydroxyaromatic compound; (2) at least one aldehyde; (3) a primary or secondary amine; wherein the molar ratio of the alkyl-substituted hydroxyaromatic compound to the aldehyde is in the range of from 1:1.25 to about 1:2; and wherein the molar ratio of the alkyl-substituted hydroxyaromatic compound to the amine is in the range of from about 1:1.25 to about 1:2.

## Description

### FIELD OF THE INVENTION

The present invention relates to new fuel compositions and methods for minimizing deposits in compression ignition engines.

### BACKGROUND OF THE INVENTION

It has long been desired to maximize fuel economy and power in diesel engines while enhancing acceleration and preventing knocking and hesitation. Gasoline engine performance can be enhanced by employing dispersants to keep intake valves and fuel injectors clean. However, it is unpredictable whether the dispersants used in gasoline will be effective in diesel fuel. The reasons for this unpredictability lie in the differences between diesel engine and gasoline engine operation and in the chemical differences between diesel fuel and gasoline.

Diesel engines are known as compression-ignition engines. Gasoline engines are known as spark-ignition engines. These two types of engines differ greatly in ignition and power control. Usually the diesel engine draws a full charge of air into the combustion chamber during the engine's intake stroke. The air is then reduced to a volumetric ratio of between 12:1 and 20:1 during a compression stroke. This high compression ratio typically raises the temperature of the air to 1000° F (about 540° C). Just before the top of the compression stroke, fuel is sprayed into the combustion chamber. The high air temperature quickly ignites the fuel to produce combustion products, which then expand to produce power and exhaust to complete the cycle. In contrast, a gasoline-powered engine mixes air and volatile liquid gasoline external to the engine's cylinder. Then the mixture is typically injected into the cylinder and compressed to a volumetric ratio of only 4: 1 to 10:1. This is about 200° F (about 110° C) below the ignition temperature. The compressed mixture is then ignited by an electric spark.

Diesel fuel contains hydrocarbons having higher boiling points than those of gasoline. Diesel fuel generally has a distillation range between 320° F to 715° F (about 160° C to 380° C). Gasoline generally distills below this temperature range, i.e., between about 100° F and 400° F (about 40 to 205° C). Diesel fuels generally contain more sulfur and nitrogen than gasoline. Moreover, gasoline is designed to resist burning when compressed in the absence of a spark. Such burning is undesired because it causes knocking. Diesel fuel must ignite spontaneously and quickly (within 1 to 2 milliseconds) without a spark. The time lag between the initiation of injection and the initiation of combustion is called ignition delay. In high-speed diesel engines, a fuel with a long ignition delay tends to produce rough operation and knocking.

Two major factors affect ignition delay: the mechanical conditions in the engine and the chemistry of the fuel. The mechanical component is influenced by such factors as compression ratio, motion of the air charge during ignition and ability of the fuel injector to atomize fuel. Diesel and gasoline combustion are affected differently by changes in engine design. For example, the larger the cylinder diameter of a diesel engine, the simpler the development of good combustion. In contrast, the smaller the cylinder of a gasoline engine, the less the danger of premature ignition of fuel. High intake-air temperature and density (provided by a supercharger) aid combustion in a diesel engine. In contrast, high intake-air temperature and density increase the tendency to knock, necessitating higher-octane fuel, in a gasoline engine.

The chemical component of ignition delay is influenced by such factors as the fuel's autoignition temperature, specific heat, density, viscosity, and other properties. The ability of a diesel fuel to ignite quickly after injection into a cylinder is known as its cetane number. The ability of a gasoline to resist burning prior to introduction of a spark is known as its octane number. A higher cetane number is equivalent to a lower octane number. Diesel fuels generally have a clear cetane number, i.e., a cetane number when devoid of any cetane improver additive, in the range of 40 to 60.

To minimize ignition delay in a diesel engine, it is necessary to enhance the mechanical component by maintaining the fuel injector's ability to precisely atomize fuel by keeping the injectors clean. However, this must be done in such a way that does not negatively affect the chemical component. It is possible that a gasoline dispersant could maintain injector cleanliness, thereby enhancing the mechanical component of combustion, while at the same time adversely affecting the fuel's combustion chemistry. Also, a dispersant which keeps engine intake valves and fuel injectors clean in a gasoline engine may not keep the fuel injectors clean in a diesel engine (diesel engines generally lack the intake valves commonly associated with gasoline engines). Diesel fuel injectors are subjected to much higher temperatures, i.e., 1000° F (about 540° C), and pressures than gasoline engine intake valves. Normal gasoline engine intake valves generally operate at temperatures in the range of about 345° F to about 575° F (about 175° C to 300° C).

Thus, in view of the above-described differences in diesel engine and gasoline engine operation and fuels, experimentation is needed to find effective diesel fuel dispersants. However, despite extensive prior research activities on diesel fuel additives carried out over the years, a need exists for dispersant compositions having superior performance capabilities and superior physical properties as applied to diesel fuels.

It would be beneficial to provide dispersant compositions that are highly effective in minimizing injector deposits in diesel engines and that provide such an advantage without harm to the engine and without deterioration in engine performance.

Accordingly, one of the objects of the present invention is to provide a diesel fuel that provides effective detergency without attendant deterioration in engine performance.

### SUMMARY OF THE INVENTION

The present invention is directed to a fuel composition comprising: (a) a compression-ignition internal combustion fuel; and (b) a Mannich dispersant additive formed from: (1) at least one alkyl-substituted hydroxyaromatic compound; (2) at least one low-molecular weight aldehyde; and (3) a primary or secondary amine; wherein the molar ratio of the alkyl-substituted hydroxyaromatic compound to the aldehyde is in the range of from 1:1.25 to about 1:2, preferably 1:1.25 to 1:1.75, most preferably 1:1.25 to 1:1.5; and wherein the molar ratio of the alkyl-substituted hydroxyaromatic compound to the amine is in the range of from about 1:1.25 to about 1:2, preferably 1:1.25 to about 1:1.75, and most preferably 1:1.25 to 1:1.5.

### DETAILED DESCRIPTION OF THE INVENTION

The alkyl-substituted hydroxyaromatic compounds, aldehydes and amines used in making the Mannich dispersants of the present invention may be any such compounds known and applied in the art, in accordance with the foregoing limitations.

Representative alkyl-substituted hydroxyaromatic compounds that may be used in forming the present Mannich products are polypropylphenol (formed by alkylating phenol with polypropylene), polybutylphenols (formed by alkylating phenol with polybutenes and/or polyisobutylene), and polybutyl-co-polypropylphenols (formed by alkylating phenol with a copolymer of butylene and/or butylene and propylene). Other similar long-chain alkylphenols may also be used. Examples include phenols alkylated with copolymers of butylene and/or isobutylene and/or propylene, and one or more mono-olefinic comonomers copolymerizable therewith (e.g., ethylene, 1-pentene, 1-hexene, 1-octene, 1-decene, etc.) where the copolymer molecule contains at least 50% by weight, of butylene and/or isobutylene and/or propylene units. The comonomers polymerized with propylene or such butenes may be aliphatic and can also contain non-aliphatic groups, e.g., styrene, o-methylstyrene, p-methylstyrene, divinyl benzene and the like. Thus in any case the resulting polymers and copolymers used in forming the alkyl-substituted hydroxyaromatic compounds are substantially aliphatic hydrocarbon polymers.

Polybutylphenol (formed by alkylating phenol with polybutylene) is preferred. Unless otherwise specified herein, the term "polybutylene" is used in a generic sense to include polymers made from "pure" or "substantially pure" 1-butene or isobutene, and polymers made from mixtures of two or all three of 1-butene, 2-butene and isobutene. Commercial grades of such polymers may also contain insignificant amounts of other olefins. So-called high reactivity polybutylenes having relatively high proportions of polymer molecules having a terminal vinylidene group, formed by methods such as described, for example, in U.S. Pat. No. 4,152,499 and W. German Offenlegungsschrift 29 04 314, are also suitable for use in forming the long chain alkylated phenol reactant.

The alkylation of the hydroxyaromatic compound is typically performed in the presence of an alkylating catalyst such as BF₃ at a temperature in the range of about 50 to about 200°C. The long chain alkyl substituents on the benzene ring of the phenolic compound are derived from polyolefin having a number average molecular weight (Mn) of from about 500 to about 3000 (preferably from about 500 to about 2100) as determined by gel permeation chromatography (GPC). It is also preferred that the polyolefin used have a polydispersity (weight average molecular weight/number average molecular weight) in the range of about 1 to about 4 (preferably from about 1 to about 2) as determined by GPC.

The chromatographic conditions for the GPC method referred to throughout the specification are as follows: 20 µL of sample having a concentration of approximately 5 mg/mL (polymer/unstabilized tetrahydrofuran solvent) is injected into 1000A, 500A and 100A columns at a flow rate of 1.0 mL/min. The run time is 40 minutes. A Differential Refractive Index detector is used and calibration is relative to polyisobutene standards having a molecular weight range of 284 to 4080 Daltons.

The Mannich dispersant may be, and preferably is, made from a long chain alkylphenol. However, other phenolic compounds may be used including high molecular weight alkyl-substituted derivatives of resorcinol, hydroquinone, cresol, catechol, xylenol, hydroxydiphenyl, benzylphenol, phenethylphenol, naphthol, tolylnaphthol, among others. Preferred for the preparation of the Mannich condensation products are the polyalkylphenol reactants, e.g., polypropylphenol and polybutylphenol whose alkyl group has a number average molecular weight of 500-2100, while the most preferred alkyl group is a polybutyl group derived from polybutylene having a number average molecular weight in the range of about 800-1300.

The preferred configuration of the alkyl-substituted hydroxyaromatic compound is that of a para-substituted mono-alkylphenol. However, any alkylphenol readily reactive in the Mannich condensation reaction may be employed. Thus, Mannich products made from alkylphenols having only one ring alkyl substituent, or two or more ring alkyl substituents are suitable for use in this invention. The long chain alkyl substituents may contain some residual unsaturation, but in general, are substantially saturated alkyl groups.

Representative amine reactants include, but are not limited to, alkylene polyamines having at least one suitably reactive primary or secondary amino group in the molecule. Other substituents such as hydroxyl, cyano, amido, etc., can be present in the polyamine. In a preferred embodiment, the alkylene polyamine is a polyethylene polyamine. Suitable alkylene polyamine reactants include ethylene diamine, diethylene triamine, triethylene tetramine, tetraethylene pentamine, pentaethylene hexamine, hexaethylene heptamine, heptaethylene octamine, octaethylene nonamine, nonaethylene decamine, decaethylene undecamine and mixtures of such amines having nitrogen contents corresponding to alkylene polyamines of the formula H₂N-(A-NH-)ₙH, where A is divalent ethylene and n is an integer of from 1 to 10. Corresponding propylene polyamines are also suitable reactants. The alkylene polyamines may be obtained by the reaction of ammonia and dihalo alkanes, such as dichloro alkanes. Thus, the alkylene polyamines obtained from the reaction of 2 to 11 moles of ammonia with 1 to 10 moles of dichloro alkanes having 2 to 6 carbon atoms and the chlorines on different carbon atoms are suitable alkylene polyamine reactants.

In another preferred embodiment of the present invention, the amine is an aliphatic diamine having one primary or secondary amino group and one tertiary amino group in the molecule. Examples of suitable polyamines include N,N,N",N"-tetraalkyldialkylenetriamines (two terminal tertiary amino groups and one central secondary amino group), N,N,N',N"-tetraalkyltrialkylenetetramines (one terminal tertiary amino group, two internal tertiary amino groups and one terminal primary amino group), N,N,N',N",N'''-pentaalkyltrialkylenetetramines (one terminal tertiary amino group, two internal tertiary amino groups and one terminal secondary amino group), N,N-dihydroxyalkyl- alpha, omega-alkylenediamines (one terminal tertiary amino group and one terminal primary amino group), N,N,N'-trihydroxyalkyl- alpha, omega-alkylenediamines (one terminal tertiary amino group and one terminal secondary amino group), tris(dialkylaminoalkyl)aminoalkylmethanes (three terminal tertiary amino groups and one terminal primary amino group), and like compounds, wherein the alkyl groups are the same or different and typically contain no more than about 12 carbon atoms each, and which preferably contain from 1 to 4 carbon atoms each. Most preferably these alkyl groups are methyl and/or ethyl groups. Preferred polyamine reactants are N, N-dialkyl-alpha, omega-alkylenediamine, such as those having from 3 to about 6 carbon atoms in the alkylene group and from 1 to about 12 carbon atoms in each of the alkyl groups, which most preferably are the same but which can be different. Most preferred is N,N-dimethyl-1,3-propanediamine.

Examples of polyamines having one reactive primary or secondary amino group that can participate in the Mannich condensation reaction, and at least one sterically hindered amino group that cannot participate directly in the Mannich condensation reaction to any appreciable extent include, but are not limited to, N-(tert-butyl)-1,3-propanediamine, N-neopentyl-1,3-propanediamine, N-(tert-butyl)-1-methyl-1,2-ethanediamine, N-(tert-butyl)-1-methyl-1,3-propanediamine, 1-methylpiperazine, and 3,5-di(tert-butyl)aminoethylpiperazine.

Representative aldehydes, preferably of low molecular weight such as C₁ to C₁₀ aliphatic, C₇ to C₁₀ aromatic or C₅ to C₁₀ heterocyclic aldehydes, for use in the preparation of the Mannich dispersants include the aliphatic aldehydes such as formaldehyde, acetaldehyde, propionaldehyde, butyraldehyde, valeraldehyde, caproaldehyde, heptaldehyde, stearaldehyde. Aromatic aldehydes which may be used include benzaldehyde and salicylaldehyde. Illustrative heterocyclic aldehydes for use herein are furfural and thiophene aldehyde, etc. Also useful are formaldehyde-producing reagents such as paraformaldehyde, or aqueous formaldehyde solutions such as formalin. Most preferred is formaldehyde or formalin.

The condensation reaction of the alkyl-substituted hydroxyaromatic compound, the amine(s) and the aldehyde may be conducted at a temperature in the range of about 40° to about 200°C. The reaction can be conducted in bulk (no diluent or solvent) or in a solvent or diluent. Water is evolved and can be removed by azeotropic distillation during the course of the reaction. The molar ratio of the alkyl-substituted hydroxyaromatic compound to the aldehyde is in the range of from 1:1.25 to about 1:2, preferably 1:1.25 to 1:1.75, most preferably 1:1.25 to 1:1.5; and the molar ratio of the alkyl-substituted hydroxyaromatic compound to the amine is in the range of from about 1:1.25 to about 1:2, preferably 1:1.25 to about 1:1.75, and most preferably 1:1.25 to 1:1.5. In determining these ratios, the alkyl-substituted hydroxyaromatic compound is analyzed for percent activity and molecular weight before the reaction with the aldehyde and amine(s). The results of this analysis are used in the stoichiometric calculations for the reaction.

The compression-ignition fuels suitable for use in the present invention include diesel, biodiesel, jet fuel and kerosene. Particularly preferred compression-ignition fuels are those fuels having a sulfur content below 0.2% by weight, more preferably below 0.05% by weight.

Other aspects of the present invention include fuels for compression ignition engines into which have been blended small amounts of the various compositions of this invention described herein, and methods for minimizing or reducing deposits in a compression ignition engine by fueling and/or operating the engine with a fuel composition of this invention.

The fuel compositions may contain supplemental additives in addition to the Mannich dispersants described above. Said supplemental additives include dispersant/detergents outside the scope of the present invention, cetane improvers, carrier fluids, demulsifiers, antioxidants, antifoam agents, anti-icing additives, biocides, combustion improvers, alkali or alltaline-earth metal detergents, drag reducers, metal deactivators, lubricity additives, dyes, markers, odor masks, odorants and stability improvers.

Other embodiments and features of this invention will become apparent from the ensuing Examples and appended claims.

### EXAMPLES

The only diesel detergency test that has met any degree of acceptance in the U.S. is the Cummins L10 test. A fuel containing a candidate additive is run in a Cummins L10 engine for 125 hours. At the end of the test, the injectors are removed and evaluated for two quantities: flow loss and plunger appearance. The flow loss determination is straightforward: the flow after the test is compared to the flow before the test, and the loss is expressed as a percentage. The plunger rating is more subjective: a trained rater inspects the plunger visually and assigns demerits following a Coordinating Research Council (CRC) protocol. Flow losses and CRC ratings for the six injectors are then averaged to give the test result. For an additized fuel, one wants the average flow loss and CRC rating to be low.

Mannich dispersants were prepared by reacting a polybutyl (Mn of approximately 950) phenol, formaldehyde and N,N-dimethyl-1,3-propanediamine in various ratios as set forth in Table 1 below. Fuel compositions were prepared by adding 40 pounds of dispersant per thousand barrels (PTB) of fuel and subjected to L 10 testing.

**Table 1**

| Phenol/aldehyde/amine ratio | Average Flow Loss | Average CRC Rating |
|---|---|---|
| Base fuel only* | 2.9% | 24.8 |
| 1:1:1* | 0.2% | 13.8 |
| 1:1.25:1.25 | 1.8% | 10.0 |
| 1:1.5:1.5 | 1.2% | 6.0 |

| | | |
|---|---|---|
| * Comparative Examples not within the scope of the present invention | | |

Table 2 is excerpted from Table 7 of US 5,634,951. This Table shows fuel compositions containing gasoline and Mannich condensation products prepared by the reaction of a polybutylphenol, formaldehyde and N,N-dimethyl-1,3-propanediamine in varying amine and aldehyde molar ratios, and the effects on detergency (i.e., amount of intake valve deposits (IVD)) and percent improvement in IVD reduction compared to base fuel.

**Table 2**

| Ex. # | Phenol/aldehyde/amine ratio | Normalized IVD | Improvement |
|---|---|---|---|
| 42* | 1:1.05:1.00 | 28 | 72% |
| 43* | 1:0.93:0.89 | 74 | 26% |
| 44* | 1:0.93:1.11 | 39 | 61% |
| 45* | 1:1.17:1.11 | 35 | 65% |
| 46* | 1:1.24:1.18 | 90 | 10% |
| B* | 1:2.00:1.00 | 217 | -117% |
| C* | 1:2.10:2.00 | 601 | -501% |

| | | | |
|---|---|---|---|
| * Comparative Examples not within the scope of the present invention | | | |

The above data show the unexpectedly improved results obtained by using the Mannich reaction products of the present invention in diesel fuel. These results are surprising in view of the corresponding results obtained with gasoline fuels, which show that, at such higher amine and aldehyde contents, detergent performance deteriorates.

## Claims

1. A fuel composition which comprises:
(a) a compression-ignition internal combustion fuel; and
(b) a Mannich dispersant additive obtainable by reacting:
(1) an alkyl-substituted hydroxyaromatic compound;
(2) an aldehyde; and
(3) an N, N-dialkyl-alpha, omega-alkylene diamine;
wherein the molar ratio of said alkyl-substituted hydroxyaromatic compound to said aldehyde is from 1:1.25 to 1:2; and wherein the molar ratio of said alkyl-substituted hydroxyaromatic compound to said amine is from 1:1.25 to 1:2.

2. A fuel composition according to claim 1 wherein said ratio of said phenol to said aldehyde is from 1:1.25 to 1:1.75 or wherein said ratio of said phenol to said amine is from 1:1.25 to 1:1.75.

3. A fuel composition according to claim 1 or 2 wherein said alkyl-substituted hydroxyaromatic compound comprises an alkyl-substituted phenol.

4. A fuel composition according to claim 3 wherein said alkyl-substituted phenol comprises a polybutyphenol or a polypropylphenol.

5. A fuel composition according to any preceding claim wherein said aldehyde comprises formaldehyde.

6. A fuel composition according to any preceding claim wherein the amine comprises from 3 to 6 carbon atoms in the alkylene group.

7. A fuel composition according to any preceding claim wherein the alkyl groups in the amine, which may be the same or different, comprise from 1 to 12 carbon atoms.

8. A fuel composition according to any preceding claim wherein said amine comprises N,N-dimethyl-1,3-propanediamine.

9. A fuel composition according to any preceding claim wherein said compression-ignition fuel is selected from the group consisting of diesel, biodiesel, jet fuel and kerosene.

10. A fuel composition according to any preceding claim wherein said compression-ignition fuel has a sulfur content below 0.2% by weight.

11. A fuel composition according to any preceding claim wherein said fuel composition further comprises at least one additive selected from the group consisting of dispersants/detergents which differ from those defined in the preceding claims, cetane improvers, carrier fluids, demulsifiers, antioxidants, antifoam agents, anti-icing additives, biocides, combustion improvers, alkali or alkaline-earth metal detergents, drag reducers, metal deactivators, lubricity additives, dyes, markers, odor masks, odorants and stability improvers.

12. A method of minimizing or reducing deposits in a compression-ignition internal combustion engine, said method comprises providing as fuel for the operation of said engine a fuel in accordance with any preceding claim.

13. Use of a Mannich dispersant additive as defined in any of claims 1 to 8 to minimise or reduce deposits in a compression-ignition internal combustion engine.
